# FASCICULE DE BREVET EUROPEEN

(11) **EP 2 429 747 B1**
(45) Date de publication et mention de la délivrance du brevet: **17.04.2013**
(21) Numéro de dépôt: 10717624.0
(22) Date de dépôt: 28.04.2010
(51) Int. Cl.: B23B 29/12, B23B 47/34, B23B 37/00

(54) **TETE DE PERCAGE A VIBRATIONS AXIALES**
ACHSIAL VIBRIERENDER BOHRKOPF
AXIALLY VIBRATING BORING HEAD

(30) Priorité: 28.04.2009 FR 0902051
(43) Date de publication de la demande: 21.03.2012
(73) Titulaire: Arts, 75013 Paris (FR); European Aeronautic Defence And Space Company Eads France, 75016 Paris (FR)
(72) Inventeur: MORARU, George, F-13090 Aix-en-provence (FR); VERON, Philippe, F-13760 Saint Cannat (FR); RABATE, Patrice, F-80800 Lahoussoye (FR)
(74) Mandataire: Maupilier, Didier
(86) Numéro de dépôt international: PCT/EP2010/055690
(87) Numéro de publication internationale: WO 2010/125090

(56) Documents cités:
- EP-A- 2 070 616
- FR-A- 2 765 505
- JP-A- 2006 159 299
- US-A1- 2006 251 480
- US-A1- 2007 107 565

## Description

La présente invention concerne une tête de perçage équipée d'un générateur d'oscillations (vibrations) axiales.

### ARRIERE PLAN DE L'INVENTION

Une machine de perçage présente l'inconvénient de produire des copeaux longs qui engendrent différents problèmes sur l'opération de perçage car ils sont difficiles à éloigner rapidement de la zone de travail et peuvent détériorer la qualité de la surface du trou fabriqué.

Un remède à cet inconvénient consiste à provoquer la fragmentation de ces copeaux par variation de leur épaisseur et l'interruption répétée de la coupe. Celle-ci est obtenue en imposant à l'outil de coupe, généralement un foret, une vibration axiale qui rend la vitesse d'avance (de pénétration dans la matière) cycliquement variable donc l'épaisseur du copeau variable, avec des amplitudes et des fréquences qui conduisent à la fragmentation des copeaux.

En même temps, il existe des opérations de perçage pour lesquelles on a l'intérêt de faire vibrer l'outil uniquement à certains moments (lors du perçage de matériaux multicouches, par exemple) ou de changer les amplitudes et/ou les fréquences des oscillations en temps réel (pour réagir et adapter le processus de coupe au matériau percé par exemple). Il est nécessaire alors d'avoir un dispositif capable d'être piloté, avec une réaction suffisamment rapide et la capacité de saisir le passage d'un matériau à l'autre.

Plusieurs dispositifs qui utilisent les oscillations axiales en perçage ont déjà été proposés. On citera par exemple le dispositif décrit dans le document EP 994 758. Ce dernier décrit un attelage entre un porte outil et son support d'entraînement qui constitue une suspension du porte outil au support telle que celle-ci est apte à produire des oscillations axiales auto entretenues de sorte que la vitesse de pénétration de l'outil dans la pièce varie cycliquement autour d'une vitesse moyenne bien entendue non nulle.

Par un autre document DE 103 43 682, on connaît un outil de fraisage ou de perçage dans lequel on soumet l'outil tournant à un mouvement axial alternatif au moyen d'un actionneur piézoélectrique ou magnétique logé dans le porte outil, relié sans fil à une alimentation. Le système est commandé à distance. Cet outil est destiné à l'usinage des matériaux composites avec des fréquences de vibration axiales très élevées (ultrasoniques) à des très faibles amplitudes.

Par un autre document U52008/041604, on connaît un outil à tête oscillante dans lequel on soumet l'outil tournant à une oscillation à très haute fréquence, qui doit être égale à la fréquence propre de l'outil, de sorte que l'oscillation générée provoque une résonance axiale de l'outil. Les actionneurs des solutions décrites dans le document US2008/041604 sont intégrés complètement dans la partie axialement mobile des dispositifs, ne pouvant pas générer des déplacements et efforts statiques ou à basse fréquence à des amplitudes suffisantes pour fragmenter les copeaux. De plus, s'agissant de l'utilisation d'une résonance, les caractéristiques des oscillations obtenues dépendent fortement de la charge, c'est-à-dire de l'effort de pénétration rencontré lors de l'opération d'usinage.

Il est également connu du document US2006/251480 une tête de perçage à oscillations axiales comportent un support d'accouplement à la tête d'un moteur d'entraînement en rotation de ce support d'accouplement qui comporte un porte outil suspendu de manière élastique suivant une direction axiale de l'outil. Un actionneur linéaire du support d'accouplement réalise une modulation linéaire de l'outil par la rotation.

### OBJET DE L'INVENTION

Les dispositifs connus ne présentent pas toutes les qualités nécessaires à une machine qui soit d'usage universel en ce qui concerne la fragmentation du copeau en perçage par superposition d'oscillations axiales au mouvement d'avance de l'outil, c'est-à-dire qui soit robuste, qui puisse générer des oscillations axiales d'amplitudes suffisantes pour fragmenter les copeaux, qui puisse s'adapter sur des machines existantes et qui puisse disposer d'une faculté d'adaptation à différents programmes de perçage, notamment pour tenir compte des différents matériaux traversés dans une même opération. Il est connu par exemple que les oscillations générées par les dispositifs décrits dans EP 999 758 et US2008/041604 sont sensibles à la charge, c'est-à-dire qu'elles dépendent des diamètres et conditions de coupe (outils, paramètres de coupe etc.). Il est également connu que les actionneurs piézoélectriques sont fragiles et ne supportent pas les sollicitations autres que les efforts de compression.

### BREVE DESCRIPTION DE L'INVENTION

A cet effet, la présente invention a pour objet une tête de perçage à générateur d'oscillations axiales, comportant un support d'accouplement de la tête à un moteur d'entraînement en rotation du support autour d'un axe, le support possédant un axe longitudinal en coïncidence avec l'axe de rotation du moteur, un porte-outil, des moyens de suspension élastiquement déformables du porte-outil au support qui sont capables de transmettre les moments de torsion et des moyens de guidage du porte-outil dans le support, le long de l'axe longitudinal de ce support, comportant un générateur commandé de mouvements alternatifs (oscillations) dans la direction de l'axe susdit, interposé entre le support et le porte-outil.

Le générateur d'oscillations (appelé également l'actionneur) est tubulaire de type piézoélectrique en appui sur le support du porte-outil par l'une de ses extrémités tandis que la tête de perçage selon l'invention comprend un pivot glissant entre le support et le porte-outil, réalisé à l'intérieur du générateur tubulaire, un manchon extérieur axialement élastique et de grande raideur en torsion, fixé par ses extrémités respectivement au support et au porte-outil et une cale annulaire d'appui axial du porte-outil sur l'extrémité du générateur, de raideur axiale déterminée et de faible raideur en flexion.

Le manchon et la cale servent à établir une précharge du générateur. La longueur de l'empilement du générateur et de la cale rapportée à la longueur libre du manchon extérieur et à sa caractéristique élastique en direction axiale permet d'ajuster la précharge du générateur. La cale annulaire, raide axialement, permet la transmission au porte-outil des vibrations issues du générateur alors que sa souplesse en flexion préserve le générateur des variations brutales des moments de flexion provenant du processus de perçage et des éventuels jeux du pivot glissant.

Dans une variante de réalisation de cet exemple, la transmission du couple entre le support et le porte-outil est assurée par une liaison glissière entre le support et le porte-outil (douille à billes sur arbre profilé ou cannelé) de sorte que le manchon extérieur n'a plus comme fonction que d'assurer la précharge du générateur.

La structure de ce manchon peut être composite avec de portions de paroi à haute conductivité thermique ou des évidements favorisant un drainage thermique de l'échauffement du générateur.

Dans un autre exemple de réalisation, la tête de perçage comprend un pivot glissant entre le support et le porte-outil, à l'intérieur du générateur tubulaire, un manchon extérieur axialement élastique et de grande raideur en torsion fixé par ses extrémités respectivement au support et au porte-outil avec en parallèle au moins un élément plan, apte à transmettre des efforts radiaux, fixé entre le support et le porte-outil et une cale annulaire d'appui axial du porte-outil sur l'extrémité du générateur, de raideur axiale déterminée.

Comme dans la réalisation précédente, la longueur de l'empilement du générateur et de la cale rapportée à la longueur libre du manchon extérieur et à sa caractéristique élastique en direction axile permet d'ajuster la précharge du générateur. La protection du générateur piézoélectrique contre les moments de torsion est assurée en parallèle par le manchon extérieur et l'élément souple susdit, qui soulagent la cale de devoir isoler en torsion le porte-outil du générateur ; cette disposition permet la reprise des efforts radiaux qui peuvent ne pas être repris par la liaison pivot glissant lorsqu'elle possède du jeu, même si ce jeu est faible. On peut mettre en oeuvre un autre élément plan de suspension du porte-outil au support en parallèle avec le premier donc également avec le manchon extérieur, cet autre élément plan étant situé au niveau de la cale d'appui, laquelle possède des reliefs qui traversent l'élément plan grâce à des évidements prévus à cet effet. Dans le cas où les deux éléments plans souples en direction axiale existent simultanément, ils forment un guidage axial de type glissière, adapté pour des faibles déplacements axiaux, et peuvent assurer la reprise des efforts radiaux, auquel cas la liaison pivot glissant à l'intérieur de l'actionneur tubulaire, assurée par une cage à billes par exemple, n'est plus absolument nécessaire. La présence de cette liaison (pivot glissant) permet néanmoins la mise en position plus aisée des éléments (porte-outil 3 et support 2), de manière précise, respectant une tolérance de coaxialité imposée, avant la mise en position en phase de montage des éléments de guidage élastique. Au cas où le guidage axial est réalisé uniquement par éléments de guidage élastique et on renonce à la liaison pivot glissant, un positionnement précis du porte-outil 3 par rapport au support 2 est nécessaire au montage.

On préférera une transmission d'énergie sans contact par le biais de systèmes émetteurs récepteurs électromagnétiques (transformateur tournant). Toutefois, une connexion à contact pourrait être utilisée en employant un collecteur tournant.

Dans une variante particulière du mode de réalisation de l'invention, le générateur peut intégrer un capteur pouvant indiquer la force qu'exerce axialement le foret sur la pièce au cours de l'usinage. Ce capteur peut effectuer une mesure directe de cet effort, par exemple utilisant l'effet piézoélectrique direct, à l'aide de quelques couches de matériau piézoélectrique, ou une mesure indirecte, par exemple de la déformation de l'actionneur (jauge de déformation, par exemple) auquel cas un traitement de signal est nécessaire pour déterminer l'effort de perçage. Il est ainsi possible de recueillir la variation de cette force et de l'exploiter pour le pilotage de l'actionneur ou même pour le pilotage des paramètres de coupe à l'aide de la machine utilisée (vitesse de coupe instantanée, vitesse d'avance). En effet, cette indication de la valeur instantanée de la force axiale mise en jeu dans l'opération de perçage constitue une variable interprétée par une unité de traitement de signaux pour modifier les paramètres de perçage à l'aide d'un modèle contenu dans un logiciel, fonctionnant sur une unité de traitement d'information (ordinateur, par exemple). Typiquement, la variation de cet effort axial sur le capteur-actionneur piézoélectrique, peut être interprétée comme le passage d'un matériau à l'autre dans un assemblage donné soumis au perçage. Par cette détection, l'unité de traitement peut modifier les paramètres de perçage au moment détecté du passage d'un matériau à l'autre et ainsi optimiser l'opération par référence à des programmes de perçage mémorisés.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés dans lesquels :
- la figure 1 représente en coupe, un dispositif de perçage à oscillations axiales connu de manière schématique,
- la figure 2 illustre par une coupe axiale, un premier mode de réalisation du dispositif conforme à l'invention,
- la figure 3 est une vue éclatée des composants de la figure 2,
- la figure 4 est une vue en coupe axiale d'un deuxième mode de réalisation du dispositif de l'invention,
- la figure 5 est une vue éclatée du dispositif représenté à la figure 4.

### DESCRIPTION DETAILLEE DE L'INVENTION

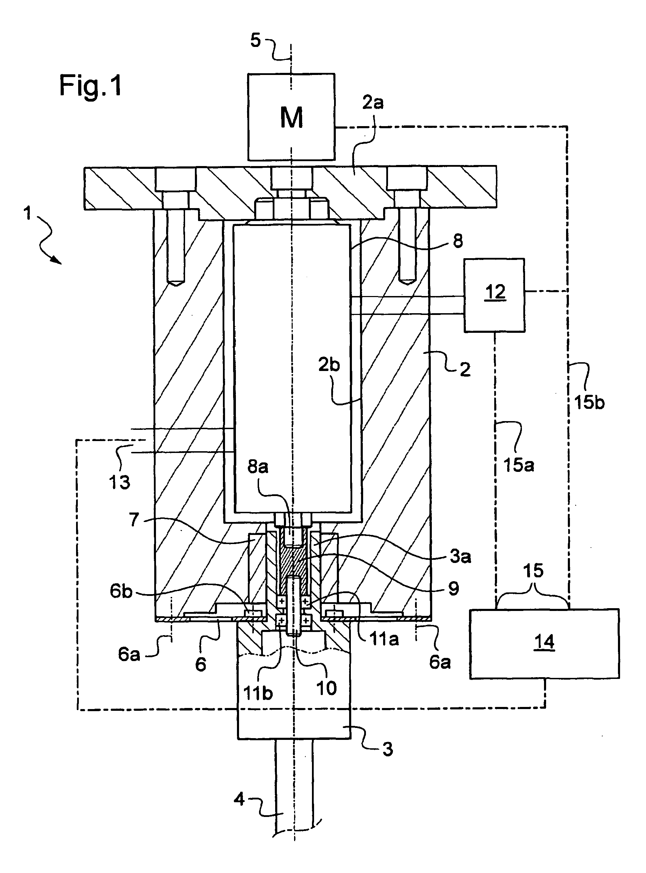

A la figure 1, la tête de perçage représentée 1 comporte un support 2 et un porte-outil 3 pour maintenir un foret 4 coaxial à un axe 5 de rotation du support 2.

Par son extrémité 2a le support est attelé à un moteur d'entraînement M schématiquement représenté et dont l'axe de rotation est coaxial à l'axe 5 qui est aussi l'axe longitudinal du support 2.

Le porte-outil 3 est fixé au support 2 par une rondelle 6 qui possède la propriété de transmettre un couple .entre le support et le porte-outil et qui est élastiquement déformable dans la direction de l'axe 5. Un exemple d'une telle rondelle est décrit dans le document EP 994 758. Cette rondelle 6 est fixée par des vis périphériques 6a au support 2 tandis que le porte-outil 3 est fixé à la rondelle 6 par des vis centrales 6b. Le porte-outil 3 possède une partie centrale 3a qui est guidée à coulissement axial dans un palier 7 du support.

Le support 2 est creux et contient dans son évidement central 2b un actionneur piézoélectrique 8 dont les oscillations, engendrées par une tension variable qui lui est appliquée, sont orientée le long de l'axe 5. L'extrémité supérieure de cet actionneur, dans lequel les éléments piézoélectriques sont enfermés dans un boîtier qui assure leur précharge, est fixée au support au niveau de sa partie supérieure 2a. Sa partie inférieure est quant à elle fixée à la partie 3a du porte-outil. Cette fixation est assurée par un organe d'accouplement 9 longitudinal, ayant des propriétés de reprise des sollicitations en flexion (nécessairement existantes du fait des jeux et imperfections dans le palier 7) tout en autorisant la transmission des mouvements alternatifs. Cet organe 9 relie l'extrémité vibrante 8a de l'actionneur à un pivot 10 qui est calé en translation dans la partie 3a du porte-outil au moyen de deux butées à billes 11a et 11b qui permettent de découpler en torsion l'actionneur 8 du porte-outil 3 en cas de rupture de la rondelle 6.

On a symbolisé en 12 l'alimentation de commande de l'actionneur piézoélectrique. Selon le cas, celle-ci peut être de type sans contact (transformateur tournant + électronique intégrée) ou avec contact (type collecteur tournant à base de contacts glissants).

Il est avantageux de se servir d'une partie de l'élément actif de l'actionneur comme capteur des efforts axiaux qu'il subit. La sortie de ce capteur est notée 13 sur la figure. Elle sera du type sans ou avec contact comme dans le cas de l'apport d'énergie à l'actionneur 8. Les signaux émis sont dirigés vers une unité de traitement 14 qui émet en sortie 15 un signal de commande de l'actionneur qui sera fonction du signal d'entrée. On sait en effet que le signal d'entrée est significatif de la charge axiale appliquée à l'actionneur ; il est donc une représentation de l'effort résistant à la pénétration de l'outil dans la pièce en cours d'usinage donc à la nature du matériau travaillé. Une variation dans ce signal correspond, par exemple, pour une pièce multicouche, à la traversée d'une interface ce qui peut entraîner une modification de la conduite de l'opération de perçage, non seulement au niveau de la commande de l'actionneur (par un chemin de transmission 15a en direction de l'actionneur ou de la source de son alimentation) mais également au niveau du moteur M d'entraînement en rotation de l'outil (par un autre chemin de transmission 15b issu de la sortie 15 de l'unité 14) et au niveau de la vitesse de pénétration du foret dans la pièce et ce, en fonction, par exemple, de valeurs de consigne qui sont mémorisée dans l'unité 14. De même que pour la commande de l'actionneur, la sortie du capteur sera traitée de préférence sans contact, par tout moyen approprié (transpondeur ou autre) pour transférer les signaux d'un capteur tournant à une unité fixe de traitement et alimenter le capteur si nécessaire. Ce n'est d'ailleurs pas sortir du cadre de l'invention que de prévoir tout ou partie de l'unité de traitement des signaux, embarquée dans le porte-outil.

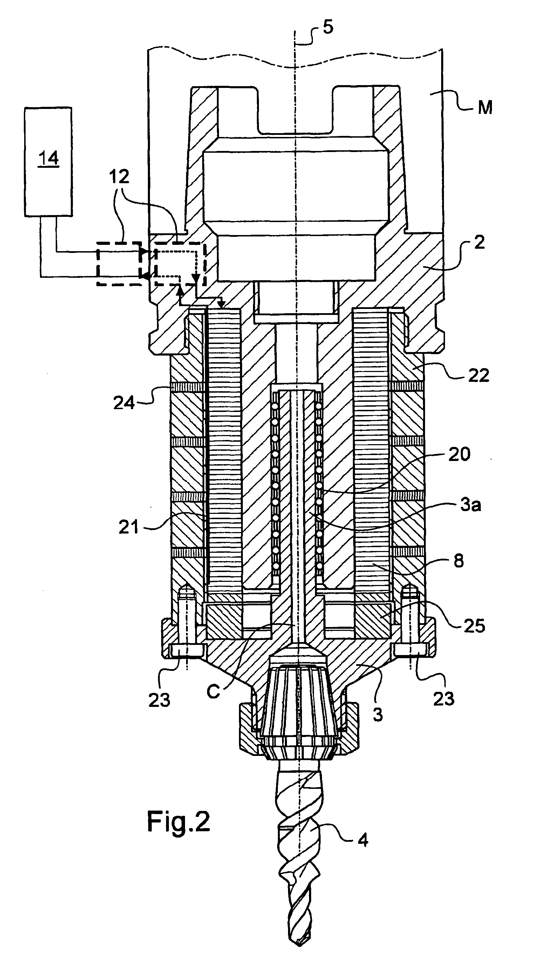

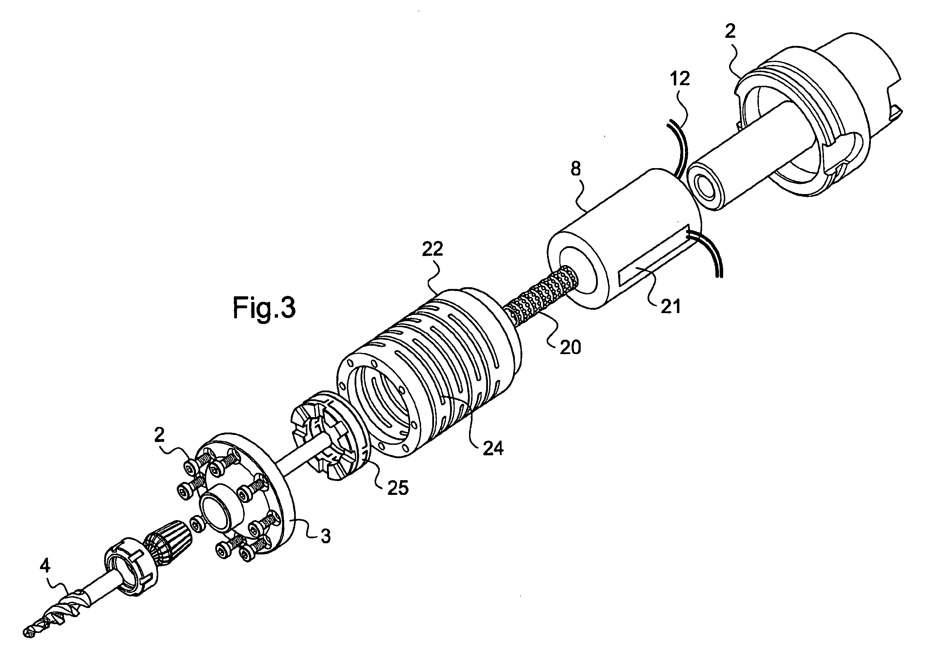

Aux figures 2 et 3, on retrouve la plupart des éléments déjà décrits avec les mêmes références. Le support 2 est attelé à l'élément de machine M qui peut être un arbre tournant issu d'un moteur ou une pièce fixe si par exemple la pièce à travailler tourne autour de l'axe 5. Le support 2 accueille une queue 3a du porte-outil 3 par une cage ou douille à billes 20 qui assure un guidage axial (pivot glissant) du porte-outil 3 dans le support 2. Ce guidage est assuré à l'intérieur de l'actionneur 8 qui est ici de forme tubulaire, sans précharge (matériau piézoélectrique brut). Le moyen de mesure de l'effort axial (capteur d'effort) est ici représenté sous la forme d'une jauge de contrainte 21 s'étendant le long d'une génératrice extérieure de l'actionneur 8.

L'essentiel de la différence de cette réalisation par rapport au schéma de la figure 1 réside dans les moyens d'accouplement du porte-outil 3 au support 2 qui permettent de transmettre à la fois le couple provenant de l'opération de perçage et les oscillations axiales tout en préservant l'actionneur 8 des efforts de torsion ou de fléchissement qui nuirait à son fonctionnement.

Ces moyens comprennent ici un manchon extérieur 22 vissé dans le support 2 par l'une de ses extrémités tandis que son autre extrémité est attelée par des vis 23 au porte-outil 3. Ce manchon possède la caractéristique d'être très raide en torsion et relativement souple dans le sens axial, ayant une raideur axiale imposée. A cet effet, il est entaillé circonférenciellement d'une multitude de fentes 24 qui le rendent élastique axialement tout en lui conservant sa rigidité en torsion. Le nombre et les dimensions des fentes seront déterminés de manière à assurer une caractéristique élastique axiale qui sera calculée de manière à réaliser la précharge qui sera appliquée à l'actionneur 8. Cette caractéristique sera cependant compatible avec l'énergie de vibration pour ne pas trop dissiper cette énergie, par exemple par une raideur axiale trop importante en regard de ces efforts. Les fentes peuvent être remplies d'un matériau à forte conductivité thermique pour drainer la chaleur dégagée par l'actionneur en fonctionnement. Le manchon 22 sert d'une part, à suspendre le porte-outil au support et, d'autre part, à transmettre les moments de torsion provenant des efforts de coupe de l'un à l'autre, tout en réalisant la précharge nécessaire pour l'actionneur. D'autres formes géométriques que celle décrite précédemment sont possibles pour le manchon 22, afin d'assurer l'ensemble de ces fonctions. Ainsi, ce manchon peut comporter une succession alternée de gorges intérieures et extérieures qui lui confèrent l'aspect d'un soufflet de raideur axiale déterminée.

Les moyens d'accouplement comprennent également une cale annulaire 25 qui est intercalée et pincée entre une extrémité de l'actionneur 8 et le porte-outil 3. Le matériau et la géométrie de cette cale 25 seront choisis pour que la transmission des oscillations axiales engendrées par l'actionneur 8 soit conservée tout en diminuant au maximum les sollicitations en flexion provenant de l'effort de coupe, qui pourraient transiter par la liaison pivot glissant qui comporte nécessairement un jeu fonctionnel si minime soit-il. Pour ce qui concerne la géométrie de cette cale 25, on notera qu'elle est pourvue de découpes dans des plans parallèles et perpendiculaires à l'axe 5 qui définissent deux parties dans cette cale relies entre elles à la manière d'une liaison cardan autorisant des micromouvements donc sur de petites amplitudes, une souplesse en flexion qui protège l'actionneur piézoélectrique.

On remarquera dans cette solution le fait que le porte-outil 3 est traversé par un canal C pratiqué au long de son axe, permettant ainsi le passage des éventuels agents de refroidissement et lubrification de la zone de coupe. Ces agents de refroidissement peuvent aussi servir pour améliorer le drainage thermique de l'actionneur. Différents moyens d'étanchéité et des orifices pratiqués dans les pièces attenantes pourrait alors être pratiqués afin d'amener cet agent en contact avec l'actionneur, de manière à provoquer un refroidissement forcé.

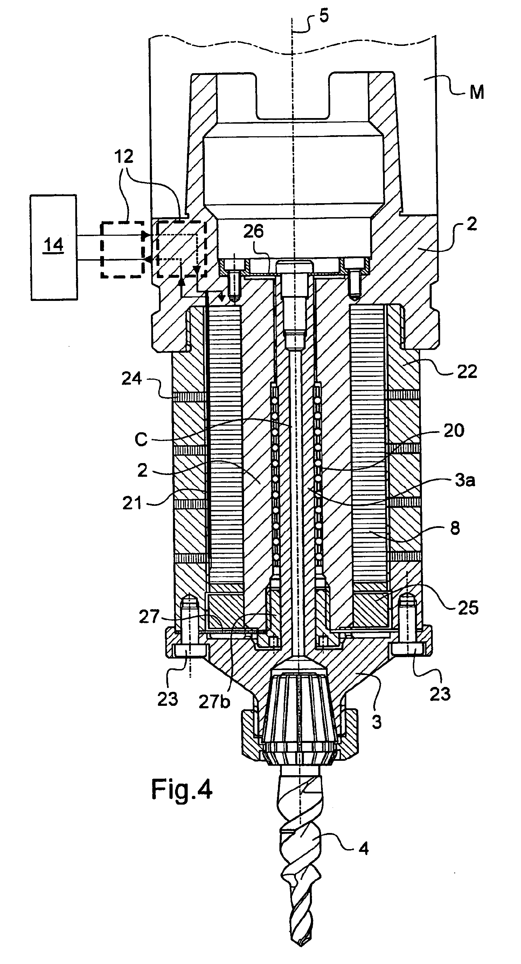

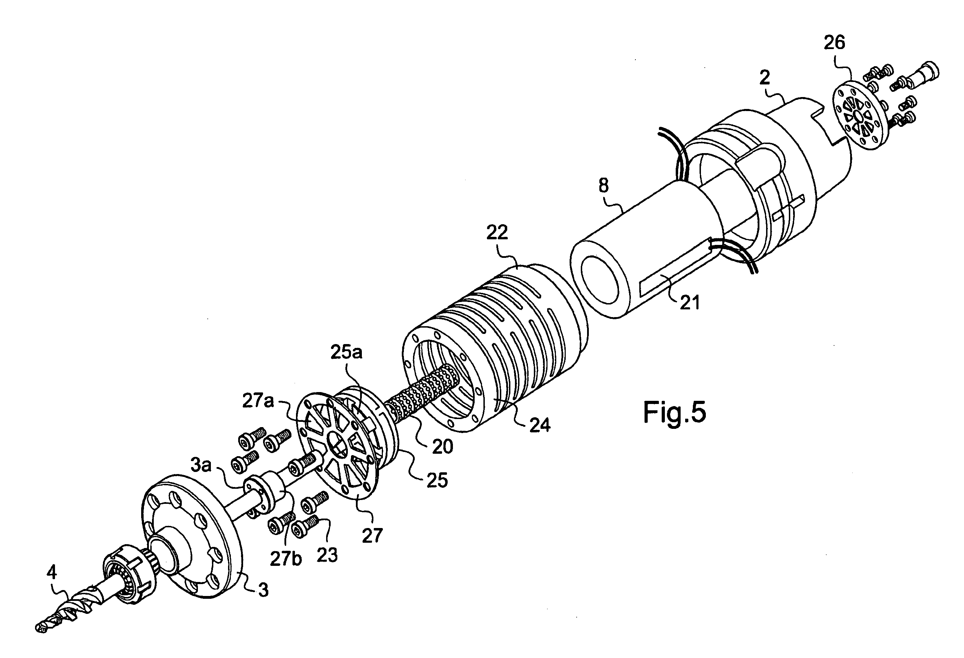

Le mode de réalisation représenté aux figures 4 et 5 est très semblable à celui qui vient d'être décrit. La différence tient à la présence d'un premier élément supplémentaire dans les moyens d'accouplement entre le support et le porte-outil. Cet élément 26 est semblable à l'élément 6 de la figure 1 au sens où il assure, conjointement avec le manchon 22, la suspension du porte-outil 3 au support 2 et ajoute une raideur radiale à la liaison, au niveau de l'extrémité du porte-outil opposée à l'outil, ce qui contribue à éviter les micromouvements latéraux qui pourraient être permis par le jeu dans la liaison pivot glissant. La transmission du couple continue à être assurée par le manchon 22, même si l'élément 26 y participe également lorsqu'il est présent.

On remarquera la présence d'un deuxième élément ou rondelle 27, semblable à celui 26, qui possède des évidements 27a par lesquels des reliefs 25a de la bague annulaire 25 traversent la rondelle pour atteindre l'appui sur le porte-outil 3. Les creux séparant les reliefs dans la cale 25 sont de dimensions suffisantes pour être supérieures à l'amplitude des vibrations de l'actionneur 8 transmises au porte-outil 3 par la cale 25, de manière à éviter à tout moment le contact entre la cale 25 et la rondelle 27. La rondelle 27 est fixée rigidement par les vis extérieurs 27 au manchon 22 et au porte-outil 3 et de manière appropriée (vis spéciale 27b) à l'axe du support 2. Le rôle de la rondelle 27 et d'ajouter également une raideur radiale au niveau de l'extrémité du porte-outil situé du coté outil, de manière à réaliser ensemble avec la pièce 26 une liaison glissière par guidage flexible, adapté aux mouvements de faible amplitude.

La raideur axiale du manchon 22 est tributaire de l'effort de précharge que l'on souhaite imposer à l'actionneur 8. C'est effort correspond en effet à la différence de position le long de l'axe 5 entre la face du porte-outil tournée vers la cale 25 et vers le manchon 22 et l'extrémité libre de ce manchon, avant sa fixation par les vis 23. Cette différence de position avant montage des deux faces susdites forme un jeu de montage qui sera déterminé par la conception et la réalisation précise des pièces. La fixation par les vis 23 provoquera l'allongement élastique du manchon 22 et par suite la compression (déterminée par la valeur du jeu de montage et la raideur axiale du manchon 22) de l'empilement actionneur 8 / cale 25.

L'invention permet de résoudre de manière simple le fractionnement des copeaux d'un outil de perçage et d'asservir ce fractionnement et plus généralement les paramètres de l'opération à une détection de la nature du matériau traité et ce, dans le cas d'un actionneur piézoélectrique notamment, avec le même organe actif.

## Revendications

1. Tête de perçage (1) à générateur d'oscillations axiales, comportant un support (2) d'accouplement de la tête à un moteur d'entraînement en rotation du support autour d'un axe, le support (2) possédant un axe longitudinal (5) en coïncidence avec l'axe de rotation du moteur, un porte-outil (3), des moyens de suspension élastiquement déformables du porte-outil (3) au support (2), permettant des mouvements axiaux, et des moyens de guidage du porte-outil (3) dans le support (2), le long de l'axe longitudinal (5) de ce support, comportant un générateur (8) commandé de mouvements alternatifs dans la direction de l'axe (5) susdit, interposé entre le support (2) et le porte-outil (3), **caractérisée en ce que** le générateur (8) de mouvements axiaux alternatifs est tubulaire de type piézoélectrique sans précharge, en appui sur le support (2) du porte-outil par l'une de ses extrémités et **en ce qu'**elle comprend un pivot glissant (20) entre le support (2) et le porte-outil (3), à l'intérieur du générateur (8), un manchon extérieur (22) axialement élastique et de grande raideur en torsion fixé par ses extrémités respectivement au support (2) et au porte-outil (3) et une cale annulaire (25) d'appui axial du porte-outil (3) sur l'extrémité du générateur (8), de raideur axiale déterminée et de faible raideur en flexion, permettant la diminution des sollicitations nuisant au générateur (8), tout en autorisant la transmission des mouvements axiaux.

2. Tête de perçage selon la revendication 1, **caractérisée en ce que** le manchon extérieur (22) et la cale annulaire (25) constituent le moyen d'installer une précharge axiale dans le générateur (8).

3. Tête de perçage (1) à générateur d'oscillations axiales selon la revendication 1, **caractérisée en ce qu'**elle comprend une glissière (20) entre le support (2) et le porte-outil (3), à l'intérieur du générateur (8), permettant la transmission des moments de torsion entre le porte-outil (3) et le support (2), un manchon extérieur (22) axialement élastique fixé par ses extrémités respectivement au support (2) et au porte-outil (3) et une cale annulaire (25) d'appui axial du porte-outil (3) sur l'extrémité du générateur (8), de raideur axiale déterminée et de faible raideur en flexion, permettant la diminution des sollicitations nuisant au générateur (8), tout en permettant la transmission des mouvements axiaux.

4. Tête de perçage (1) à générateur d'oscillations axiales selon la revendication 1, **caractérisée en ce qu'**elle comprend un pivot glissant (20) entre le support (2) et le porte-outil (3), à l'intérieur du générateur (8), un manchon extérieur (22) axialement élastique et de grande raideur en torsion fixé par ses extrémités respectivement au support (2) et au porte-outil (3) avec en parallèle au moins un élément plan (26,27), apte à transmettre des efforts radiaux, fixé entre le support (2) et le porte-outil (3) et une cale annulaire (25) d'appui axial du porte-outil (3) sur l'extrémité du générateur (8), de raideur axiale déterminée et de faible raideur en flexion.

5. Tête de perçage (1) à générateur d'oscillations axiales selon la revendication 1, **caractérisée en ce qu'**elle comprend un manchon extérieur (22) axialement élastique et de grande raideur en torsion fixé par ses extrémités respectivement au support (2) et au porte-outil (3) avec deux éléments plans (26,27), montés en parallèle, aptes à transmettre des efforts radiaux, fixé entre le support (2) et le porte-outil (3), formant ainsi un guidage axial à éléments flexibles, et une cale annulaire (25) d'appui axial du porte-outil (3) sur l'extrémité du générateur (8), de raideur axiale déterminée et de faible raideur en flexion, permettant la diminution des sollicitations nuisant au générateur (8), tout en permettant la transmission des mouvements axiaux.

6. Tête de perçage selon la revendication 1, **caractérisée en ce que** l'actionneur (8) porte un capteur (21) de la force qu'exerce axialement le foret sur la pièce au cours de l'usinage.

## Claims

1. Drilling head (1) with a generator of axial oscillations, comprising a mount (2) for coupling the head to a motor that drives the rotation of the mount about an axis, the mount (2) having a longitudinal axis (5) that coincides with the axis of rotation of the motor, a tool holder (3), elastically deformable suspension means for suspending the tool holder (3) from the mount (2), allowing axial movements, and guide means to guide the tool holder (3) in the mount (2) along the longitudinal axis (5) of this mount, comprising a controlled generator (8) of reciprocating movements in the direction of the abovementioned axis (5), interposed between the mount (2) and the tool holder (3), **characterized in that** the generator (8) of reciprocating axial movements is tubular and of the piezoelectric type without preload, pressing against the tool holder mount (2) via one of its ends, and **in that** it comprises a sliding pivot (20) between the mount (2) and the tool holder (3) inside the generator (8), an axially elastic external sleeve (22) of high torsional stiffness fixed by its ends to the mount (2) and to the tool holder (3) respectively, and an annular packing piece (25) of determined axial stiffness and low flexural stiffness via which the tool holder (3) presses axially against the end of the generator (8), to reduce the stresses detrimental to the generator (8) while allowing the axial movements to be transmitted.

2. Drilling head according to Claim 1, **characterized in that** the external sleeve (22) and the annular packing piece (25) constitute the means of applying an axial preload to the generator (8).

3. Drilling head (1) with generator of axial oscillations according to Claim 1, **characterized in that** it comprises a guideway (20) between the mount (2) and the tool holder (3), inside the generator (8), allowing the transmission of torsion moments between the tool holder (3) and the mount (2), an axially elastic external sleeve (22) fixed by its ends to the mount (2) and to the tool holder (3) respectively, and an annular packing piece (25) of determined axial stiffness and low flexural stiffness via which the tool holder (3) presses axially against the end of the generator (8), to reduce the stresses detrimental to the generator (8) while allowing the axial movements to be transmitted.

4. Drilling head (1) with generator of axial oscillations according to Claim 1, **characterized in that** it comprises a sliding pivot (20) between the mount (2) and the tool holder (3) inside the generator (8), an axially elastic external sleeve (22) of high torsional stiffness fixed by its ends to the mount (2) and to the tool holder (3) respectively with, in parallel, at least one flat element (26, 27) capable of transmitting radial load, which is fixed between the mount (2) and the tool holder (3), and an annular packing piece (25) of determined axial stiffness and low flexural stiffness via which the tool holder (3) presses axially against the end of the generator (8).

5. Drilling head (1) with generator of axial oscillations according to Claim 1, **characterized in that** it comprises an axially elastic external sleeve (22) of high torsional stiffness fixed by its ends to the mount (2) and to the tool holder (3) respectively, with two flat elements (26, 27) mounted in parallel and able to transmit radial load, which is fixed between the mount (2) and the tool holder (3) thus forming an axial guide with flexible elements, and an annular packing piece (25) of determined axial stiffness and low flexural stiffness via which the tool holder (3) presses axially against the end of the generator (8), reducing the stresses detrimental to the generator (8) while at the same time allowing the axial movements to be transmitted.

6. Drilling head according to Claim 1, **characterized in that** the actuator (8) carries a sensor (21) that senses the force applied axially by the drill bit to the workpiece during machining.

## Patentansprüche

1. Bohrkopf (1) mit Generator von Axialschwingungen, umfassend eine Halterung (2) zur Kopplung des Kopfes mit einem Motor zum Drehantrieb der Halterung um eine Achse, wobei die Halterung (2) eine Längsachse (5) aufweist, die mit der Drehachse des Motors zusammenfällt, einen Werkzeughalter (3), elastisch verformbare Mittel zur Aufhängung des Werkzeughalters (3) an der Halterung (2), die axiale Bewegungen ermöglichen, und Mittel zur Führung des Werkzeughalters (3) in der Halterung (2) entlang der Längsachse (5) dieser Halterung, die einen gesteuerten Generator (8) hin- und hergehender Bewegungen in der Richtung der oben genannten Achse (5) aufweisen, der zwischen der Halterung (2) und dem Werkzeughalter (3) angeordnet ist, **dadurch gekennzeichnet, dass** der Generator (8) hin- und hergehender axialer Bewegungen rohrförmig vom piezoelektrischen Typ ohne Vorspannung ist und mit einem seiner Enden an der Halterung (2) des Werkzeughalters anliegt, und dadurch, dass der Bohrkopf einen zwischen der Halterung (2) und dem Werkzeughalter (3) gleitenden Drehzapfen (20) im Inneren des Generators (8), eine axial elastische Außenhülse (22) von hoher Torsionssteifigkeit, die mit ihren Enden an der Halterung (2) bzw. an dem Werkzeughalter (3) befestigt ist, und ein axial an dem Werkzeughalter (3) anliegendes ringförmiges Abstandselement (25) am Ende des Generators (8) mit einer bestimmten axialen Steifigkeit und mit geringer Biegesteifigkeit, das die Verringerung der den Generator (8) beeinträchtigenden Beanspruchungen ermöglicht und gleichzeitig die Übertragung der axialen Bewegungen gestattet, umfasst.

2. Bohrkopf nach Anspruch 1, **dadurch gekennzeichnet, dass** die Außenhülse (22) und das ringförmige Abstandselement (25) das Mittel zum Erzeugen einer axialen Vorspannung in dem Generator (8) darstellen.

3. Bohrkopf (1) mit Generator von Axialschwingungen nach Anspruch 1, **dadurch gekennzeichnet, dass** er eine Gleitführung (20) zwischen der Halterung (2) und dem Werkzeughalter (3) im Inneren des Generators (8), welche die Übertragung der Torsionsmomente zwischen dem Werkzeughalter (3) und der Halterung (2) ermöglicht, eine axial elastische Außenhülse (22), die mit ihren Enden an der Halterung (2) bzw. an dem Werkzeughalter (3) befestigt ist, und ein axial an dem Werkzeughalter (3) anliegendes ringförmiges Abstandselement (25) am Ende des Generators (8) mit einer bestimmten axialen Steifigkeit und mit geringer Biegesteifigkeit, das die Verringerung der den Generator (8) beeinträchtigenden Beanspruchungen ermöglicht und gleichzeitig die Übertragung der axialen Bewegungen gestattet, umfasst.

4. Bohrkopf (1) mit Generator von Axialschwingungen nach Anspruch 1, **dadurch gekennzeichnet, dass** er einen zwischen der Halterung (2) und dem Werkzeughalter (3) gleitenden Drehzapfen (20) im Inneren des Generators (8), eine axial elastische Außenhülse (22) von hoher Torsionssteifigkeit, die mit ihren Enden an der Halterung (2) bzw. an dem Werkzeughalter (3) befestigt ist, mit, parallel angeordnet, mindestens einem flächigen Element (26, 27), das geeignet ist, radiale Kräfte zu übertragen, und zwischen der Halterung (2) und dem Werkzeughalter (3) befestigt ist, und ein axial an dem Werkzeughalter (3) anliegendes ringförmiges Abstandselement (25) am Ende des Generators (8) mit einer bestimmten axialen Steifigkeit und mit geringer Biegesteifigkeit umfasst.

5. Bohrkopf (1) mit Generator von Axialschwingungen nach Anspruch 1, **dadurch gekennzeichnet, dass** er eine axial elastische Außenhülse (22) von hoher Torsionssteifigkeit, die mit ihren Enden an der Halterung (2) bzw. an dem Werkzeughalter (3) befestigt ist, mit zwei parallel angebrachten flächigen Elementen (26, 27), die geeignet sind, radiale Kräfte zu übertragen, zwischen der Halterung (2) und dem Werkzeughalter (3) befestigt sind und somit eine axiale Führung mit flexiblen Elementen bilden, und ein axial an dem Werkzeughalter (3) anliegendes ringförmiges Abstandselement (25) am Ende des Generators (8) mit einer bestimmten axialen Steifigkeit und mit geringer Biegesteifigkeit, das die Verringerung der den Generator (8) beeinträchtigenden Beanspruchungen ermöglicht und gleichzeitig die Übertragung der axialen Bewegungen gestattet, umfasst.

6. Bohrkopf nach Anspruch 1, **dadurch gekennzeichnet, dass** das Stellglied (8) einen Sensor (21) für die Kraft trägt, welche der Bohrer axial auf das Werkstück, das bearbeitet wird, ausübt.
